**Europäisches Patentamt**

**European Patent Office**

**Office européen des brevets**

(19)

(11) Veröffentlichungsnummer: **0 278 095 B1**

(12) **EUROPÄISCHE PATENTSCHRIFT**

(45) Veröffentlichungstag der Patentschrift:
24.10.90

(51) Int. Cl.⁵: **B62D 7/14, B60G 3/20**

(21) Anmeldenummer: **87118631.8**

(22) Anmeldetag: **16.12.87**

(54) **Radaufhängung für lenkbare Räder von Kraftfahrzeugen, insbesondere für Hinterräder.**

(30) Priorität: **03.02.87 DE 3703199**

(43) Veröffentlichungstag der Anmeldung:
**17.08.88 Patentblatt 88/33**

(45) Bekanntmachung des Hinweises auf die Patenterteilung:
**24.10.90 Patentblatt 90/43**

(84) Benannte Vertragsstaaten:
**DE FR GB IT SE**

(56) Entgegenhaltungen:
**GB-A- 2 130 539**
**GB-A- 2 130 986**
**GB-A- 2 155 869**

**PATENT ABSTRACTS OF JAPAN, Band 10,**
**Nr. 261 (M-514)[2317], 5. September 1986; & JP - A**
**- 61 85276 (FUJI HEAVY IND.) 3.04.1986**

(73) Patentinhaber: **Bayerische Motoren Werke**
**Aktiengesellschaft, Patentabteilung**
**AJ-30 Postfach 40 02 40 Petuelring 130,**
**D-8000 München 40(DE)**

(72) Erfinder: **Jurr, Reinhold, Gotzingerstrasse 8,**
**D-8000 München 70(DE)**

(74) Vertreter: **Dexheimer, Rolf, Bayerische Motoren Werke**
**Aktiengesellschaft Postfach 40 02 40 Petuelring 130 -**
**AJ-31, D-8000 München 40(DE)**

ACTORUM AG

## Beschreibung

Die Erfindung bezieht sich auf eine Radaufhängung für lenkbare Räder von Kraftfahrzeugen nach dem Oberbegriff des Patentanspruchs 1.

Bei Radaufhängungen für lenkbare Vorderräder ist es weithin üblich, eine etwa in ihrer Längsrichtung verlagerbare und annähernd quer zur Fahrzeuglängsrichtung verlaufende Spurstange an einem mit dem Radträger fest verbundenen Lenkhebel angreifen zu lassen. Diese Bauart ist im Prinzip auch schon für Hinterräder mehrfach bekannt geworden (beispielsweise DE-A 3 338 389 oder 34 46 881), wenn diese Räder zusätzlich zu den Vorderrädern lenkbar sein sollen.

Es ist ferner bekannt (DE-A 3 437 071), an einem Hilfsrahmen, der die Schräglenker lagert und ferner über Gummielemente mit dem Fahrzeugaufbau verbunden ist, Stellzylinder angreifen zu lassen. Werden die Stellylinder betätigt, ist eine begrenzte Verdrehung des Hilfsrahmens und damit auch der über die Schräglenker gelagerten Räder um eine Hochachse möglich, jedoch nur um ein sehr geringes Maß im Rahmen der Elastizität der Gummilager.

Aus Gründen des verfügbaren Einbauraums, aber auch aus kinematischen und elastokinematischen Gründen kann sich das Erfordernis ergeben, einem die Tragfeder abstützenden Querlenker beispielsweise die weitere Funktion zuzuweisen, auch als Spurstange zu wirken. Ein solcher Querlenker überträgt dann nicht nur - wie die übliche Spurstange - Kräfte in Richtung der Lenkerachse, sondern durch die sehr hohe Abstüzkraft der Tragfeder auch zusätzliche Kräfte in annähernd vertikaler Richtung. Dadurch ist das vom Stellmotor angetriebene Betätigungsglied, an dem das innere Ende des Querlenkers angelenkt ist, auch sehr hohen vertikalen Kräften unterworfen. Dies bedingt einen höheren Verschleiß dieser Gelenkverbindung und zwingt zu einer besonders großen Dimensionierung. Die durch die wesentlich höheren Kräfte bedingten Belastungen der Lenkübertragungseinrichtung (Hydrozylinder, Stellmotor, Hydromotor, Zahnstangenlenkgetriebe und dgl.) führen zu einer erhöhten Reibung und damit zu einem ungünstigen Regel- bzw. Ansprechverhalten (Losbrechkräfte). Weiterhin ist ein erhöhter Lenkleistungsbedarf gegeben.

Bei einer direkten Ansteuerung eines Querlenkers wäre es schließlich sehr schwierig, beispielsweise auf das Lenkwinkelverhältnis des kurveninneren zum kurvenäußeren Rades (Ackermannwinkel) Einfluß zu nehmen.

Der Erfindung liegt die Aufgabe zugrunde, eine Radaufhängung der vorausgesetzten Bauart zu schaffen, die unter Vermeidung einer separaten Spurstange wenig Bauraum beansprucht, ein günstiges Ansprechverhalten hat und übermäßige Kräfte von den Betätigungsgliedern des Stellmotors fernhält.

Diese Aufgabe wird erfindungsgemäß bei einer Radaufhängung nach dem Oberbegriff des Patentanspruchs 1 durch die im kennzeichnenden Teil dieses Patentanspruchs angegebenen Maßnahmen gelöst. Auf diese Weise werden die von der Tragfeder auf den Lenker übertragenen vertikalen Kräfte nicht auf die Betätigungsglieder des Stellmotors weitergeleitet, sondern von dem Zwischenhebel aufgenommen. Die Lage des Zwischenhebels kann dabei weiterhin so gewählt werden, daß auch Querkräfte, die von einer in Längsansicht geneigten Lage der tragfeder herrühren, zumindest in Normallage des Kraftfahrzeugs nicht auf den Stellmotor wirken. Der Zwischenhebel gestattet es auch, zwischen dem Stellmotor und dem Lenker eine Kraftuntersetzung vorzusehen, wodurch sowohl die Belastung der Lenkeinrichtung als auch die erforderliche Stellkraft vermindert sind. Dabei ergibt sich auch eine Wegübersetzung, die bei einer geregelten Arbeitsweise des Stellmotors regeltechnische Vorteile wegen der Vergrößerung der Regelstrecken liefern kann. Durch Wahl eines geeigneten Winkels der beiden Zwischenhebel einer Achse ist es schließlich möglich, das kurveninnere Rad einen größeren Lenkeinschlag ausführen zu lassen als das kurvenäußere, so daß das Seitenkraftpotential beider Räder voll ausgeschöpft wird.

Die Erfindung und weitere vorteilhafte Einzelheiten der Erfindung sind im folgenden anhand mehrerer in der Zeichnung dargestellter Ausführungsbeispiele näher erläutert. Es zeigen:

Fig. 1 eine perspektivische Ansicht eines Ausführungsbeispiels der neuen Radaufhängung;
Fig. 2 eine Teilansicht eines weiteren Ausführungsbeispiels in Richtung des Pfeiles 11 in Fig. 1;
Fig.3 eine der Fig. 2 entsprechende Ausschnittsdarstellung einer weiteren Ausführungsform und
Fig.4-8 der Fig. 2 entsprechende Ansichten nochmals abgeänderter Ausführungsbeispiele.

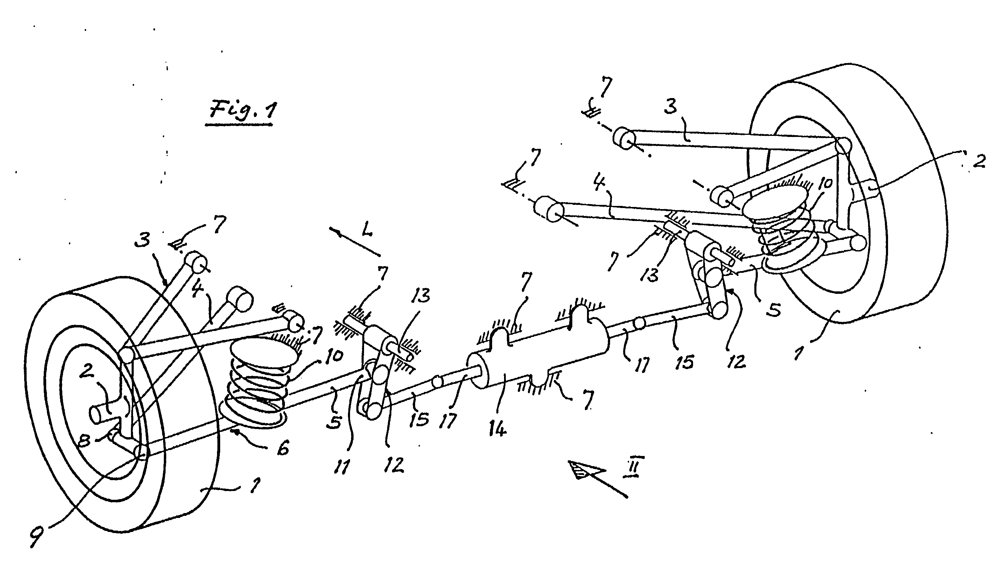

Die in Fig. 1 der Zeichnung dargestellte Radaufhängung dient für lenkbare hintere Räder 1 eines Kraftfahrzeugs. Der jeweils ein Rad 1 lagernde Radträger 2 ist mit einem oberen Dreiecksquerlenker 3 und einem unteren, aus zwei einzelnen Lenkern 4 und 5 gebildeten unteren Querlenker 6 mit dem lediglich angedeuteten Fahrzeugaufbau 7 verbunden. Die erwähnten Lenker könnten auch mittelbar mit dem Fahrzeugaufbau 7 verbunden sein, wenn sie an einem Fahrschemel oder dgl. angelenkt sind, der seinerseits starr oder über Gummielemente mit dem Fahrzeugaufbau zu verbinden wäre.

Die radträgerseitigen Gelenke 8 und 9 der unteren Lenker 4 und 5 haben in Längsrichtung einen Abstand voneinander, so daß eine Querverlagerung, beispielsweise des Lenkers 5 zu einer Lenkbewegung des Radträgers 2 und damit des Rades 1 führt.

Wie man in der Zeichnung erkennt, ist der die Tragfeder 10 abstützende Lenker 5 in Querrichtung verlagerbar und mit seinem inneren Ende nur mittelbar mit dem Fahrzeugaufbau verbunden. Mit seinem inneren Ende 11 ist der Lenker 5 an einem Zwischenhebel 12 angelenkt, der um eine annähernd in Fahrzeuglängsrichtung L verlaufende Schwenkachse 13 am Fahrzeugaufbau 7 schwenkbar ist. Jeder Zwischenhebel 12 ist mit einem Stellmotor 14 verbunden, der sich am Fahrzeugaufbau 7 oder dgl. abstützt und durch einen Hydrozylinder, durch einen Hydromotor, durch einen elektrischen Stellmotor, aber auch durch eine Zahnstangenlenkung oder ein Hebelgetriebe gebildet sein kann.

Der in der Zeichnung angedeutete Stellmotor 14 ist jeweils über eine seitliche Spurstange 15 mit dem Zwischenhebel 12 verbunden.

Wie man in der Zeichnung erkennt, ist der Zwischenhebel 12 an seinem dem Fahrzeugaufbau 7 abgewandten Ende - über die Spurstangen 15 - mit dem Stellmotor 14 und in seinem mittleren Bereich mit dem quer verlagerbaren Lenker 5 verbunden. Durch die Variation der jeweiligen Abstände der Anlenkung des Lenkers 5 und der Anlenkung der Spurstange 15 von der Schwenkachse 13 läßt sich die oben erwähnte Kraftuntersetzung bzw. Wegübersetzung in weiten Grenzen festlegen.

Bei dem Ausführungsbeispiel nach Fig. 2 kann auf eine Spurstange verzichtet werden, wenn der Zwischenhebel 12' mit einem etwa in dessen Längsrichtung verlaufenden Langloch 16 versehen ist, in das das translatorisch verlagerbare Betätigungsglied 17 des Stellmotors 14 mit einem Querzapfen 18 eingreift. Hierzu ist es erforderlich, daß der Zwischenhebel 12' und das Betätigungsglied 17 sich im wesentlichen in einer Ebene bewegen.

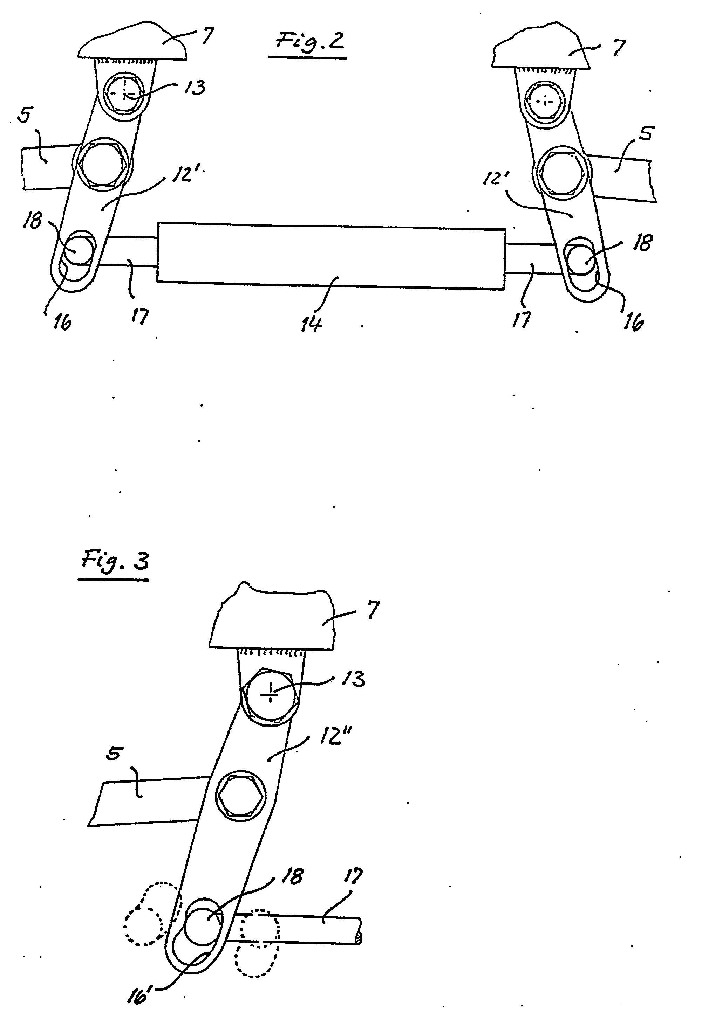

Gemäß Fig. 3 kann das Langloch 16' des Zwischenhebels 12" in seiner Längsrichtung auch bogenförmig ausgebildet sein und somit eine bogenförmige Kulisse für den Querzapfen 18 bilden. Dies kann zum Erhalt einer bestimmten Lenkgeometrie der Achse (Ackermannfunktion) zweckmäßig sein.

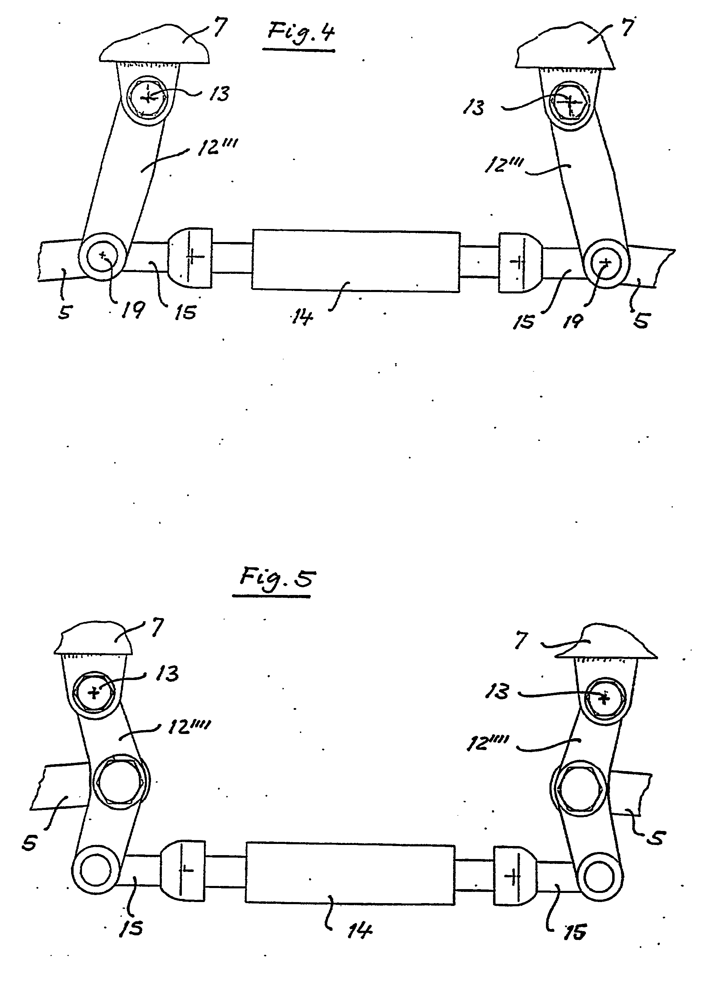

In Fig. 4 ist eine Ausführungsform dargestellt, bei der der Lenker 5 und die seitliche Spurstange 15 über ein gemeinsames Gelenk 19 an dem Zwischenhebel 12''' angreifen.

Gemäß Fig. 5 kann ferner der Zwischenhebel 12'''' in einer Ansicht in Richtung seiner Schwenkachse 13 winkelförmig ausgebildet sein. Die beiden Schenkel sind dabei nach außen abgewinkelt. Um für einen bestimmten Lastfall (z.B. Normallage des Fahrzeugs, Stellung der Räder: geradeaus) die Spurstangen 15 und den Stellmotor 14 kräftefrei zu halten, genügt es dabei, wenn lediglich der obere Schenkel des Winkelhebels 12'''' so geneigt ist, daß die aus der Vertikalkraft und einer eventuellen seitlichen Neigung der Tragfeder 10 resultierende Kraft am inneren Gelenk des Lenkers 5 in Richtung dieses Schenkels verläuft.

Bei dem bisher beschriebenen Ausführungsformen sind die Zwischenhebel 12, 12', 12" und 12'''' von ihrem aufbeiseitigem Gelenk 13 jeweils nach unten gerichtet. Sie könnten aber von ihrem aufbauseitigen Gelenk auch nach oben gerichtet, als "stehend" angeordnet sein.

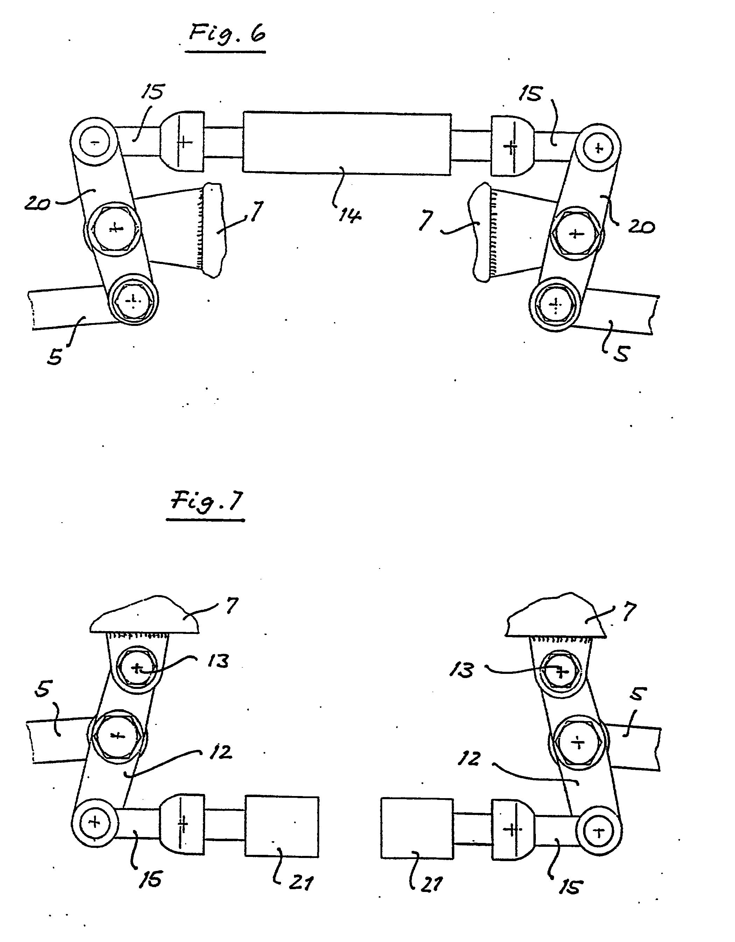

Bei dem Ausführungsbeispiel nach Fig. 6 ist ein Zwischenhebel 20 vorgesehen, der als zweiarmiger Hebel ausgebildet ist und in seinem mittleren Bereich am Fahrzeugaufbau 7 oder dgl. angelenkt ist. An dem oberen Ende des Zwischenhebels 20 greift dabei über seitliche Spurstangen 15 der Stellmotor 14 an, während am unteren Ende jeweils der Lenker 5 angelenkt ist.

Wie in Fig. 7 dargestellt ist, kann ferner bei den zwei Radaufhängungen einer Achse jedem der beiden Zwischenhebel 12 ein eigener Stellmotor 21 zugeordnet sein, der über eine seitliche Spurstange 15 den Zwischenhebel 12 betätigt oder seinerseits um eine Fahrzeugslängsrichtung verlaufende Achse schwenkbar am Fahrzeugaufbau gelagert ist.

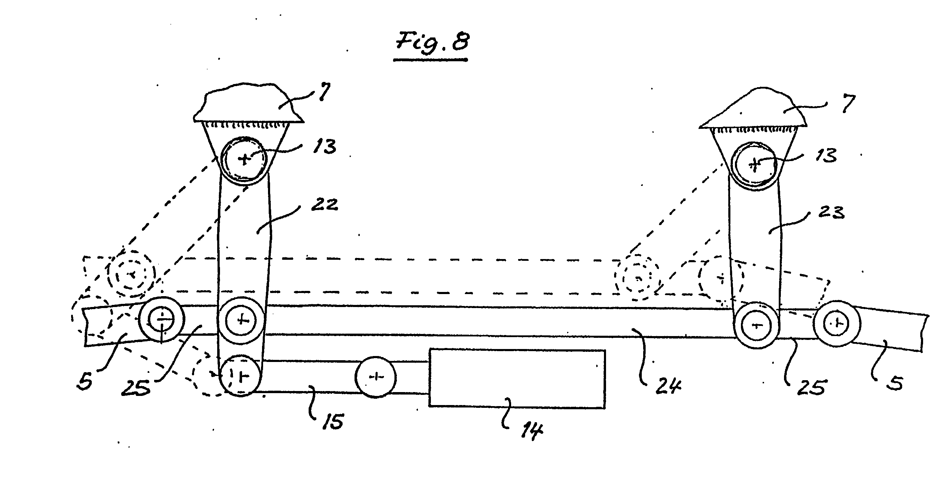

Gemäß Fig. 8 können für die zwei Radaufhängungen einer Fahrzeugachse die beiden Zwischenhebel 22, 23 auch über eine Quertraverse 24 gelenkig miteinander verbunden sein und der Stellmotor 14 an dem Zwischenhebel 22 angreifen. Es wäre auch möglich, daß der Stellmotor 14 mit der Quertraverse 24 selbst verbunden ist. Wie man erkennt, ist die Quertraverse 24 jeweils über ihre Gelenkverbindung mit den Zwischenhebeln 22 und 23 etwas verlängert und der verlagerbare Lenker 5 ist an der so gebildeten Verlängerung 25 der Quertraverse 24 angelenkt. Stehen die Zwischenhebel 22 und 23 unter einem Winkel von 90° zu der Quertraverse 24, so behält diese auch bei ihrer seitlichen Verlagerung stets eine zur Ausgangslage parallele Lage bei. Dadurch müssen die Lager der Lenker 5 geringere Verdrahwinkel aufnehmen, als wenn sie an den Zwischenhebeln gelagert werden.

Stehen die Zwischenhebel 22 und 23 nicht senkrecht zu der Quertraverse 24 ergibt sich bei deren Querverlagerung wieder eine unterschiedliche Querbewegung des inneren Anlenkpunktes des linken und rechten Lenkers 5, was kinematisch durchaus erwünscht sein kann, aber wiederum etwas größere Verdrehwinkel der inneren Lager der Lenker 5 bedingt.

**Patentansprüche**

1. Radaufhängung für lenkbare Räder von Kraftfahrzeugen, insbesondere für Hinterräder, mit einem das Rad (1) lagernden Radträger (2), der mit dem Fahrzeugaufbau (7) oder einem Fahrschemel über mehrere Radführungsglieder verbunden ist, von denen eines als Spurstange wirkt und durch einen Stellmotor (14) quer verlagerbar ist, dadurch gekennzeichnet, daß des verlagerbare Radführungsglied ein die Tragfeder (10) abstützender Lenker (5) ist, der mit seinem inneren Ende (11) an einem Zwischenhebel (12, 12', 12", 12'''', 20) angelenkt ist, der um eine zumindest annähernd in Fahrzeuglängsrichtung (L) verlaufende Schwenkachse (13) am Fahrzeugaufbau (7) oder einem Fahrschemel schwenkbar befestigt sowie mit dem Stellmotor (14) verbunden ist.

2. Radaufhängung nach Anspruch 1, dadurch gekennzeichnet, daß der Zwischenhebel (12, 12') an seinem dem Fahrzeugaufbau (7) abgewandten Ende mit dem Stellmotor (14) und in seinem mittleren Bereich mit dem verlagerbaren Lenker (5) verbunden ist.

3. Radaufhängung nach Anspruch 1, dadurch gekennzeichnet, daß der Stellmotor (14) über eine seitliche Spurstange (15) an dem Zwischenhebel (12) angreift.

4. Radaufhängung nach Anspruch 1, dadurch gekennzeichnet, daß der Stellmotor (14) in einem Langloch (16) des Zwischenhebels (12") angreift, das etwa in dessen Längsrichtung verläuft.

5. Radaufhängung nach Anspruch 4, dadurch gekennzeichnet, daß das Langloch (16') in seiner Längsrichtung bogenförmig ausgebildet ist.

6. Radaufhängung nach Anspruch 3, dadurch gekenzeichnet, daß der Lenker (5) und die seitliche Spurstange (15) über ein gemeinsames Gelenk (19) an dem Zwischenhebel (12″) angreifen.

7. Radaufhängung nach Anspruch 1, dadurch gekennzeichnet, daß der Zwischenhebel (12, 12', 12″, 12‴, 12⁗) von seinem aufbauseitigen Gelenk (13) nach unten gerichtet ist.

8. Radaufhängung nach Anspruch 1, dadurch gekennzeichnet, daß der Zwischenhebel (12⁗) in einer Ansicht in Richtung seiner Schwenkachse (13) winkelförmig ausgebildet ist.

9. Radaufhängung nach Anspruch 8, dadurch gekennzeichnet, daß die beiden Schenkel des winkligen Zwischenhebels (12⁗) nach außen abgewinkelt sind.

10. Radaufhängung nach Anspruch 1, dadurch gekennzeichnet, daß der Zwischenhebel (20) ein zweiarmiger Hebel ist, der in seinem mittleren Bereich am Fahrzeugaufau (7) oder einem Fahrschemel angelenkt ist.

11. Fahrzeugachse mit Radaufhängungen nach Anspruch 1, dadurch gekennzeichnet, daß jedem der beiden Zwischenhebel (12) ein eignener Stellmotor (21) zugeordnet ist.

12. Fahrzeugachse mit Radaufhängungen nach Anspruch 1, dadurch gekennzeichnet, daß die beiden Zwischenhebel (22, 23) über eine Quertraverse (24) gelenkig miteinander verbunden sind und der Stellmotor (14) nur an einem der Zwischenhebel (22) oder an der Quertraverse angreift.

13. Fahrzeugachse nach Anspruch 12, dadurch gekennzeichnet, daß die Quertraverse (24) jeweils über ihre Gelenkverbindung mit den Zwischenhebeln (22, 23) verlängert und der verlagerbare Lenker an der Verlängerung (25) der Querachse (24) angelenkt ist.

**Claims**

1. A wheel suspension for steerable wheels of motor vehicles, more particularly for rear wheels, comprising a whel support (2) bearing a wheel (1) and connected to the car body (7) or a subframe via a number of wheel-guiding elements each operating as a track rod and transversely movable by a servomotor (14), characterised in that the movable wheel-guide element is a connecting rod (5) bearing the suspension spring (10) and pivoted at its inner end (11) to an intermediate lever (12, 12', 12″, 12‴, 20) which is secured to the car body (7) around a pivot (13) extending at least approximately in the longitudinal direction (L) of the vehicle, or is pivotally connected to a subframe and to the servomotor (14).

2. A wheel suspension according to claim 1, characterised in that the end of the intermediate lever (12, 12') remote from the car body (7) is connected to the servomotor (14) and the central region is connected to the movable connecting rod (5).

3. A wheel suspension according to claim 1, characterised in that the servomotor (14) is connected to the intermediate lever (12) via a lateral track rod (15).

4. A wheel suspension according to claim 1, characterised in that the servomotor (14) engages a slot (18) in the intermediate lever (12″) extending approximately in the longitudinal direction thereof.

5. A wheel suspension according to claim 4, characterised in that the slot (16') is arcuate in the longitudinal direction thereof.

6. A wheel suspension according to claim 3, characterised in that the connecting rod (5) and the lateral track rod (15) engage the intermediate lever (12″) via a common joint (19).

7. A wheel suspension according to claim 1, characterised in that the intermediate lever (12, 12', 12″, 12‴, 12⁗) extends downwards from its joint (13) on the car body.

8. A wheel suspension according to claim 1, characterised in that the intermediate lever (12⁗) is angular as viewed in the direction of its pivot (13).

9. A wheel suspension according to claim 8, characterised in that the two limbs of the angular intermediate lever (12⁗) are bent outwards.

10. A wheel suspension according to claim 1, characterised in that the intermediate lever (20) is a two-armed lever pivoted at its central region to the car body (7) or a subframe.

11. A vehicle axle with wheel suspensions according to claim 1, characterised in that each of the two intermediate lever (12) is associated with a separate servomotor (21).

12. A vehicle axle with wheel suspensions according to claim 1, characterised in that the two intermediate levers (22, 23) are pivotably interconnected via a transverse member (24) and the servomotor (14) is connected to only one of the intermediate levers (22) or to the cross-member.

13. A vehicle axle according to claim 12, characterised in that the cross-member (24) extends beyond each joint connecting it to the intermediate levers (22, 23) and the movable connecting rod is connected to the prolongation (25) of the transverse member (24).

**Revendications**

1. Suspension pour roues orientables de véhicules à moteur, en particulier pour roues arrières, comprenant un support de roue (2) maintenant la roue (1), qui est relié à la carrosserie du véhicule (7) ou à un faux-châssis par plusieurs éléments de guidage de roue, parmi lesquels un d'entre eux agit comme barre d'accouplement et peut être déplacé transversalement au moyen d'un servomoteur (14), caractérisée en ce que l'élément de guidage de roue mobile est un bras (5) qui supporte le ressort de suspension (10), et est articulé par son extrémité intérieure (11) à un levier intermédiaire (12, 12', 12″, 12‴, 20), lui-même fixé à la carrosserie du véhicule (7) ou à un faux châssis, en pouvant pivoter autour d'un axe (13) se développant au moins approximativement dans le sens longitudinal du véhicule (L) et se trouvant en liaison avec le servomoteur (14).

2. Suspension de roue selon la revendication 1, caractérisée en ce que le levier intermédiaire (12, 12') est relié, par son extrémité éloignée de la carrosserie (7) du véhicule, au servomoteur (14) et dans sa zone centrale avec le bras (5) mobile.

3. Suspension de roue selon la revendication 1, caractérisée en ce que le servomoteur (14) agit sur le levier intermédiaire (12) par une barre d'accouplement (15) transversale.

4. Suspension de roue selon la revendication 1, caractérisée en ce que le servomoteur (14) est appliqué dans un trou oblong (16) du levier intermédiaire (12"), qui se développe à peu près dans le sens de sa longueur.

5. Suspension de roue selon la revendication 4, caractérisée en ce que le trou oblong (16') est réalisé en forme d'arc dans le sens de sa longueur.

6. Suspension de roue, selon la revendication 3, caractérisée en ce que le bras (5) et la barre d'accouplement transversale (15) sont accrochés au levier intermédiaire (12''') sur la même articulation.

7. Suspension de roue selon la revendication 1, caractérisée en ce que le levier intermédiaire (12, 12', 12", 12''', 12'''') est dirigé vers le bas à partir de son articulation (13) située côté carrosserie.

8. Suspension de roue selon la revendication 1, caractérisée en ce que le levier intermédiaire (12'''') est réalisé de forme angulaire en vue dans la direction de son axe d'articulation (13). ·

9. Suspension de roue selon la revendication 8, caractérisée en ce que les deux branches du levier intermédiaire (12'''') en forme d'angle constituent un angle ouvert vers l'extérieur.

10. Suspension de roue selon la revendication 1, caractérisée en ce que le levier intermédiaire (20) est un levier à deux bras qui est articulé dans sa zone centrale à la carrosserie du véhicule ou à un faux châssis.

11. Essieu de véhicule avec suspensions de roues selon la revendication 1, caractérisé en ce qu'à chaque levier intermédiaire (12) est associé un servomoteur (21) propre.

12. Essieu de véhicule avec suspensions de roues selon la revendication 1, caractérisé en ce que les deux leviers intermédiaires (22, 23) sont reliés l'un à l'autre de façon articulée par une entretoise transversale (24) et le servomoteur (14) est accroché seulement à l'un des leviers intermédiaires (22) ou à l'entretoise transversale.

13. Essieu de véhicule selon la revendication 12, caractérisé en ce que l'entretoise transversale (24) se prolonge au-delà de sa liaison articulée avec les leviers intermédiaires et le bras mobile est articulé sur le prolongement (25) de l'entretoise transversale (24).

_Fig.1_

EP 0 278 095 B1

_Fig.2_

7

13

5

12'

18

16

17

14

7

5

12'

18

16

17

_Fig. 3_

7

13

12"

5

18

17

16'

Fig.4

Fig.5

_Fig. 6_

_Fig. 7_

Fig. 8